# EUROPÄISCHE PATENTANMELDUNG

(11) **EP 1 039 281 A1**
(43) Veröffentlichungstag der Anmeldung: **27.09.2000**
(21) Anmeldenummer: 99125497.0
(22) Anmeldetag: 21.12.1999
(51) Int. Cl.: G01K 1/16

(54) **Messeinsatz für Widerstandsthermometer**

(30) Priorität: 24.03.1999 DE 19913195
(71) Anmelder: Techem Aktiengesellschaft & Co., 60528 Frankfurt (DE)
(72) Erfinder: Glaser, Friedrich, Dipl.-Ing., 63517 Rodenbach (DE)
(74) Vertreter: KEIL & SCHAAFHAUSEN

(57) **Zusammenfassung**

Es wird ein Meßeinsatz für Widerstandsthermometer mit einer flexiblen Leiterplatte aus Kunststofffolie oder dgl. beschrieben, an deren einem Ende ein temperaturempfindlicher Meßwiderstand vorgesehen ist, der über Leiterbahnen mit am anderen Ende der Leiterplatte vorgesehenen Lötkontakten oder dgl. für den Anschluß einer Anschlußleitung verbunden ist, und mit einem die flexible Leiterplatte umgebenden Schutzrohr. Ein zuverlässiger Wärmeübergang zu dem Meßwiderstand der Leiterplatte wird dadurch gewährleistet, dass der den Meßwiderstand tragende Meßbereich der Leiterplatte eine Breite aufweist, die größer ist als der Durchmesser des Schutzrohres, so daß sich die vollflexible Leiterplatte an die Innenseite des Schutzrohres anlegt.

## Beschreibung

Die Erfindung betrifft einen Meßeinsatz für Widerstandsthermometer mit einer flexiblen Leiterplatte aus Kunststofffolie oder dgl., an deren einem Ende ein temperaturempfindlicher Meßwiderstand vorgesehen ist, der über Leiterbahnen mit am anderen Ende der Leiterplatte vorgesehenen Lötkontakten oder dgl. für den Anschluß einer Anschlußleitung verbunden ist, und mit einem die flexible Leiterplatte umgebenden Schutzrohr.

Ein derartiger Meßeinsatz ist aus der DE 39 39 165 C1 bekannt, die einen Temperatursensor mit einer in einem Schutzrohr angeordneten flexiblen Kunststoff-Folie als Leiterplatine beschreibt, deren Leiterbahnen an einem Ende mit einem als Meßwiderstand dienenden Keramikplättchen mit dünnem Metallüberzug als Widerstandsschicht verbunden und an dem dem Meßwiderstand abgekehrten Ende der Kunststoff-Folie mit Lötkontakten versehen sind, die mit Anschlußklemmen eines Klemmträgers oder mit den Leitungen eines nach außen führenden Anschlußkabels elektrisch verbunden sind. Der Raum zwischen dem geschlossenen Ende des Schutzrohres und dem Meßwiderstand ist mit elektrisch isolierender Wärmeleitpaste gefüllt. Das Einfüllen der Wärmeleitpaste in das Schutzrohr ist jedoch sehr aufwendig und erhöht die Herstellkosten.

Aus der DE 298 06 702 U1 ist ferner ein Meßeinsatz für Widerstandsthermometer bekannt, der ein Anschlußbauteil und ein in eine Rohrarmatur hineinragendes Sensorbauteil aufweist.

Das Anschlußbauteil und das Sensorbauteil bestehen aus flachen flexiblen Elementen und sind im rechten Winkel zueinander miteinander verlötet. An dem Sensorbauteil ist ein Temperatursensor befestigt, der mit einer Schutzschicht überzogen ist. Auch das Sensorbauteil ist zumindest auf der Seite, auf der sich die elektrischen Leitungen befinden mit einem Schutzüberzug versehen. Der Meßeinsatz wird entweder direkt in die Rohrarmatur eingeführt, so dass die Gefahr von Beschädigungen besteht. Wird dagegen ein Schutzrohr verwendet, wie es aus der DE 39 39 165 C1 bekannt ist, so ist es auch hier erforderlich, den Raum zwischen dem Schutzrohr und dem Meßwiderstand mit Wärmeleitpaste zu füllen.

Aufgabe der Erfindung ist es daher, die Montage des Meßeinsatzes bei zuverlässig gewährleisteter Meßgenauigkeit zu vereinfachen.

Diese Aufgabe wird mit der Erfindung im wesentlichen dadurch gelöst, dass die Leiterplatte wenigstens in dem den Meßwiderstand tragenden Meßbereich eine Breite aufweist, die größer ist als der Durchmesser des Schutzrohres.

Da die Leiterplatte voll flexibel ist, legt sich die Leiterfolie in dem den Meßwiderstand tragenden Bereich beim Einschieben in das Schutzrohr an dessen Innenseite an, so dass eine direkte Wärmeleitung vom Schutzrohr zu der Leiterplatte gewährleistet ist. Auf die zusätzliche Wärmeleitpaste kann dann verzichtet werden.

Gemäß einer bevorzugten Ausgestaltung der Erfindung entspricht die Breite des Meßbereiches der Leiterplatte etwa dem inneren Umfang des Schutzrohres oder ist um 10 bis 30% kleiner als dieser, so dass sich die Leiterplatte über den gesamten oder wesentlichen Umfang des Schutzrohres an dessen Innenfläche anlegt und damit eine maximale Wärmeübergangsfläche erreicht wird.

In Weiterbildung der Erfindung ist die Breite des die Lötkontakte tragenden Leiterbahnbereiches der Leiterplatte kleiner als der Durchmesser des Schutzrohres, um beim Einschieben des Meßeinsatzes in das Schutzrohr die Reibungswiderstände zu verringern.

Gemäß einer bevorzugten Weiterbildung dieses Erfindungsgedankens weist der Leiterbahnbereich der Leiterplatte auf seiner Rückseite eine Verstärkungsfolie oder dgl. auf, so dass ein problemloses Einschieben der Leiterplatte bis zum unteren Ende des Schutzrohres ermöglicht wird.

Um es dem den Meßwiderstand tragenden Bereich der Leiterplatte zu ermöglichen, sich dem Innenumfang des Schutzrohres genau anzupassen, ist erfindungsgemäß zwischen dem Meßbereich und dem Leiterbahnbereich der Leiterplatte ein Übergangsbereich mit verminderter Breite vorgesehen. Dieser Bereich ist so schmal wie möglich ausgebildet und leitet von der gebogen anliegenden Form des Meßbereiches zu der flächigen Form des Leiterbahnbereiches der Leiterplatte über.

Zur Verbesserung des Wärmewiderstandes sind die Leiterbahnen im Leiterbahnbereich so dünn wie möglich ausgebildet und mäanderförmig angeordnet.

Gemäß einer bevorzugten Ausgestaltung der Erfindung weist die Leiterplatte wenigstens im Bereich der Leiterbahnen zwei übereinander angeordnete Kupferschichten mit jeweils einer Leiterbahn auf, wobei an dem dem Meßwiderstand zugewandten Ende dieses Bereiches der Leiterplatte vorzugsweise eine Durchkontaktierung von der oberen Kupferschicht zu der unteren Kupferschicht vorgesehen ist. Dadurch ist es möglich, die Lötkontakte für die Anschlußleitung nicht mehr dicht nebeneinander sondern auf den beiden gegenüberliegenden Seiten der Leiterplatte anzuordnen. Dies verringert die Kurzschlußgefahr beim Verlöten. Außerdem kann die mäanderförmige Bahn der einzelnen Leiterbahnen verlängert werden, so dass der Wärmewiderstand noch größer wird.

In Weiterbildung dieses Erfindungsgedankens kann auch auf der Rückseite des Meßbereiches der Leiterplatte eine zweite Kupferschicht vorgesehen sein, durch die die Wärmeleitung zum Meßwiderstand verbessert und gleichzeitig die Anpreßkraft der Folie an das Schutzrohr erhöht wird.

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: eine Draufsicht auf eine Leiterplatte gemäß einer ersten Ausführungsform der Erfindung,
- Fig. 2: einen Längsschnitt durch ein Schutzrohr mit darin eingeschobener Leiterplatte,
- Fig. 3: einen Schnitt entlang der Linie III-III in Fig. 2 und
- Fig. 4: eine Draufsicht auf eine Leiterplatte gemäß einer zweiten Ausführungsform der Erfindung.

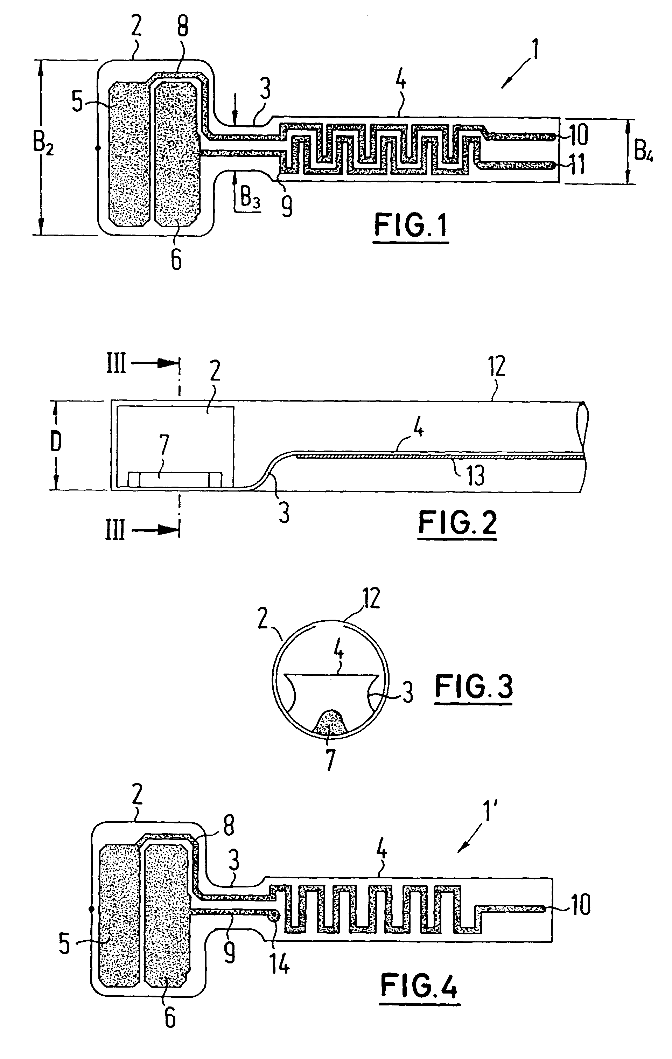

Wie aus Fig. 1 der Zeichnung ersichtlich ist, weist eine flexible Leiterplatte 1 aus Kunststofffolie, vorzugsweise Capton-Folie, drei in Längsrichtung aneinander angrenzende Bereiche unterschiedlicher Breite auf. Im einzelnen sind ein Meßbereich 2 mit einer Breite B₂, ein Übergangsbereich 3 mit einer Breite B₃ und ein Leiterbahnbereich 4 mit einer Breite B₄ vorgesehen.

In dem Meßbereich 2 sind zwei etwa gleichgroße Kupfer(Cu)-Flächen 5, 6 vorgesehen, die über einen in Fig. 3 dargestellten SMD-Meßwiderstand 7 verbunden sind. Von den Kupferflächen 5, 6 verlaufen Leiterbahnen 8, 9 aus Kupfer oder Kupfer-Basis-Legierung durch den Übergangsbereich 3 und den Leiterbahnbereich 4 zu am Ende des Leiterbahnbereichs 4 vorgesehenen Lötkontakten 10, 11 für den Anschluß einer nicht dargestellten Anschlußleitung. Im Leiterbahnbereich 4 verlaufen die Leiterbahnen 8, 9 mäanderförmig. Die Kupferflächen 5, 6 und die Leiterbahnen 8, 9 sind allseitig vom Kunststoff der Leiterplattenfolie 1 umschlossen und weisen nur an den jeweiligen Enden Kontaktierungsöffnungen für den Meßwiderstand 7 bzw. die Lötkontakte 10, 11 auf.

Wie sich aus den Fig. 2 und 3 ergibt, wird die Leiterplatte 1 in ein Schutzrohr 12, insbesondere aus Edelstahl, eingeschoben. Da die Breite B₂ des Meßbereiches 2 der flexiblen Leiterplatte 1 erheblich größer ist als der Durchmesser D des Schutzrohres 12, legt sich, wie aus Fig. 3 ersichtlich ist, der Meßbereich 2 im wesentlichen vollflächig an die Innenfläche des Schutzrohres 12 an. Es hat sich hierbei als vorteilhaft erwiesen, die Breite B₂ des Meßbereichs 2 etwa dem Innenumfang des Schutzrohres 12 anzupassen, um eine maximale Wärmeübergangsfläche zu erhalten. Zweckmäßig ist jedoch auch, die Breite B₂ um etwa 10 bis 30, vorzugsweise etwa 20% kleiner vorzusehen als den Innenumfang des Schutzrohres, da so bei ausreichender Wärmeübergangsfläche ein einfacheres Einschieben der Leiterplatte 1 in das Schutzrohr 12 erreicht wird. Das Einschieben der Leiterplatte 1 in das Schutzrohr 2 wird ferner dadurch erheblich erleichtert, dass die Breite B₄ des Leiterbahnbereiches kleiner ist als der Durchmesser D des Schutzrohres, so dass in diesem Bereich kein Reibungswiderstand auftritt. Ferner ist im Leiterbahnbereich 4 eine Verstärkungsfolie auf der Unterseite der Leiterplatte 1 vorgesehen, um ein Umbiegen beim Einschieben zu vermeiden. Der Übergangsbereich 3 leitet von der gebogen anliegenden Form des Meßbereiches 2 zu der flächigen Form des Leiterbahnbereiches 4 über und weist eine minimale Breite B₃ auf.

Durch die vollflächige Anlage des Meßbereiches 2 an die Innenfläche des Schutzrohres 12 wird ein optimaler Wärmeübergang von dem in das zu messende Medium eingesetzten Schutzrohr 12 zu dem Meßwiderstand 7 gewährleistet. Die Kupferflächen 5, 6 sind hierbei so ausgelegt, dass sie gleichzeitig den Meßwiderstand 7 tragen, durch ihre Größe für eine gute Wärmeleitung sorgen und zu einer reproduzierbaren Anpresskraft der Leiterplattenfolie 1 beitragen. Durch unterschiedlich große Ausschnitte in der Deckfolie ist die Bestückung der Leiterplatte 1 mit unterschiedlichen Bauteilgrößen möglich. Die sonst übliche Verwendung von Wärmeleitpaste kann entfallen. Dadurch ist in Verbindung mit der automatisiert herstell- und bestückbaren flexiblen Leiterplatte 1 eine wesentliche Kostenreduzierung möglich.

Die in Fig. 4 dargestellte zweite Ausführungsform der Erfindung unterscheidet sich von der ersten Ausführungsform dahingehend, dass die Leiterplatte 1' auf der Unterseite des Leiterbahnbereichs 4' eine zweite Kupferfläche aufweist, die über eine Durchkontaktierung 14 mit der oberen Kupferschicht verbunden ist. In der unteren Kupferschicht verläuft die Leiterbahn 9 bis zum nicht dargestellten Lötkontakt 11 auf der Unterseite der Leiterplatte 1'. Da die Lötkontakte 10 und 11 nicht mehr nebeneinander sondern auf zwei einander gegenüberliegenden Seiten der Leiterplatte 1' vorgesehen sind, wird die Kurzschlußgefahr beim Verlöten verringert. Außerdem kann die mäanderförmige Bahn der Leiterbahnen 8, 9 verlängert und dadurch der Wärmewiderstand erhöht werden.

Ergänzend kann außerdem vorgesehen sein, auch auf der Rückseite des Meßbereichs 2 eine weitere Kupferfläche vorzusehen, durch die die Wärmeleitung zum Meßwiderstand 7 verbessert und die Anpreßkraft der Leiterplattenfolie 1' erhöht wird.

Im übrigen entspricht der Aufbau und die Funktion der Leiterplatte 1' gemäß der zweiten Ausführungsform derjenigen der ersten Ausführungsform, so dass auf die entsprechenden Ausführungen verwiesen wird.

### Bezugszeichenliste:

- 1, 1': Leiterplatte
- 2: Meßbereich
- 3: Übergangsbereich
- 4: Leiterbahnbereich
- 5: Kupferfläche
- 6: Kupferfläche
- 7: Meßwiderstand
- 8: Leiterbahn
- 9: Leiterbahn
- 10: Lötkontakt
- 11: Lötkontakt
- 12: Schutzrohr
- 13: Verstärkungsfolie
- 14: Durchkontaktierung

## Patentansprüche

1. Meßeinsatz für Widerstandsthermometer mit einer flexiblen Leiterplatte (1, 1') aus Kunststofffolie oder dgl., an deren einem Ende ein temperaturempfindlicher Meßwiderstand (7) vorgesehen ist, der über Leiterbahnen (8, 9) mit am anderen Ende der Leiterplatte (1, 1') vorgesehenen Lötkontakten (10, 11) oder dgl. für den Anschluß einer Anschlußleitung verbunden ist, und mit einem die flexible Leiterplatte (1, 1') umgebenden Schutzrohr (12), **dadurch gekennzeichnet,** dass die Leiterplatte (1, 1') wenigstens in dem den Meßwiderstand (7) tragenden Meßbereich (2) eine Breite B₂ aufweist, die größer ist als der Durchmesser D des Rohres (12).

2. Meßeinsatz nach Anspruch 1, **dadurch gekennzeichnet,** dass die Breite B₂ des Meßbereichs (2) der Leiterplatte (1, 1') etwa dem inneren Umfang des Schutzrohres (12) entspricht oder um 10 bis 30, vorzugsweise 20% kleiner ist als dieser.

3. Meßeinsatz nach Anspruch 1 oder 2, **dadurch gekennzeichnet**, dass die Breite B₄ des die Lötkontakte (10, 11) tragenden Leiterbahnbereiches (4) der Leiterplatte (1, 1') kleiner ist als der Durchmesser D des Schutzrohres (12).

4. Meßeinsatz nach einem der vorhergehenden Ansprüche, **dadurch gekennzeichnet,** dass der Leiterbahnbereich (4) der Leiterplatte (1, 1') auf seiner Rückseite eine Verstärkungsfolie (13) oder dgl. aufweist.

5. Meßeinsatz nach einem der vorhergehenden Ansprüche, **dadurch gekennzeichnet,** dass zwischen dem Meßbereich (2) und dem Leiterbahnbereich (4) der Leiterplatte (1, 1') ein Übergangsbereich (3) mit verminderter Breite B₃ vorgesehen ist.

6. Meßeinsatz nach einem der vorhergehenden Ansprüche, **dadurch gekennzeichnet,** dass die Leiterbahnen (8, 9) im Leiterbahnbereich (4) der Leiterplatte (1, 1') mäanderförmig angeordnet sind.

7. Meßeinsatz nach einem der vorhergehenden Ansprüche, **dadurch gekennzeichnet**, dass die Leiterplatte (1') wenigstens im Leiterbahnbereich (4) zwei übereinander angeordnete Kupferschichten mit jeweils einer Leiterbahn (8, 9) aufweist.

8. Meßeinsatz nach Anspruch 7, **dadurch gekennzeichnet,** dass an dem dem Meßbereich (2) zugewandten Ende des Leiterbahnbereiches (4) der Leiterplatte (1') eine Durchkontaktierung (14) von der oberen Kupferschicht zu der unteren Kupferschicht vorgesehen ist.

9. Meßeinsatz nach einem der vorhergehenden Ansprüche, **dadurch gekennzeichnet,** dass auf der Rückseite des Meßbereiches (2) der Leiterplatte (1, 1') eine zweite Kupferschicht vorgesehen ist.
